# EUROPÄISCHE PATENTSCHRIFT

(11) **EP 1 129 610 B1**
(45) Veröffentlichungstag und Bekanntmachung des Hinweises auf die Patenterteilung: **17.08.2005**
(21) Anmeldenummer: 01103852.8
(22) Anmeldetag: 16.02.2001
(51) Int. Cl.: A01D 45/02

(54) **Einzugs- und Pflückeinrichtung einer Erntegutbergungsmaschine**
Corn gathering and picking device for a harvesting machine
Dispositif d'introduction et de cueillage pour une machine de récolte

(30) Priorität: 26.02.2000 DE 10009199
(43) Veröffentlichungstag der Anmeldung: 05.09.2001
(73) Patentinhaber: Maschinenfabrik Kemper GmbH & Co. KG, 48703 Stadtlohn (DE)
(72) Erfinder: Wübbels, Richard, 46414 Rhede (DE); Wolters, Norbert,, 48712 Gescher (DE)
(74) Vertreter: Holst, Sönke, Dr.

(56) Entgegenhaltungen:
- EP-A- 0 492 082
- EP-A- 1 078 567
- DE-A- 19 734 747
- US-A- 4 581 878
- US-A- 4 864 807
- US-A- 5 916 113

## Beschreibung

Die Erfindung betrifft eine Einzugs- und Pflückeinrichtung entsprechen dem Oberbegrift des Anspruchs, die wenigstens eine um eine erste Achse rotierende Pflückwalze aufweist, welche eingerichtet ist, Pflanzen durch einen Pflückkanal zu ziehen, durch den Teile von den Pflanzen abgetrennt werden.

In der DE 197 34 747 A ist ein Maisernte-Vorsatzgerät zum Anbau an eine selbstfahrende Erntemaschine beschrieben, das reihenunabhängig mähen und die Maiskolben von den Pflanzen pflücken kann, um sie gesondert vom Rest der Pflanzen zu verarbeiten, beispielsweise auszudreschen. Das Gerät weist zum reihenunabhängigen Erfassen und Abmähen der Pflanzen ein Mähwerk mit einer rotierenden, am Außenumfang mit Aussparungen versehenen Trommel und einem darunter rotierenden Messer auf, wie es von Maisgebissen her bekannt ist. Die Pflanzen werden dann stromab des Mähwerks angebrachten konventionellen Pflückaggregaten zugeführt. Da der Transportweg der Pflanze sehr lang sein kann, besteht die Gefahr, dass die Pflanzen wegfallen oder umkippen. Dann kann die Pflückeinrichtung die Pflanze aber nicht mehr aufnehmen.

Aus der EP-A-1078 567 ist eine Pflüchvorrichtung bekannt, die eine Mehrzahl von Plüchscheiben umfaβt die um eine Mochachse drehbar sind und ihrerseits jeweils eine Mehrzahl von umlanfenden Pflüchwalzen aufweisen.

Die der Erfindung zugrunde liegende Aufgabe wird darin gesehen, eine Einzugs- und Pflückeinrichtung bereitzustellen, die sich durch einen einfachen Aufbau und Betriebssicherheit auszeichnet, und dabei einen kürzeren Transportweg aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Kerngedanke besteht darin, bei einem Erntegerät in Form eines Pflückers die Pflückwalze auf einem Element anzuordnen, das sich relativ zu den übrigen Teilen der Einzugs- und Pflückeinrichtung bewegt. Die wenigstens eine Pflückwalze bewegt sich somit auf einer Bahn, auf der auch die Pflanzen mitgeführt werden. Ein Pflanzenstängel wird von der Pflückwalze an einem von vielen möglichen Punkten der Bahn erfasst und auf ihr mitgeführt. Während dieser Bewegung wird der Pflanzenstängel von der sich in an sich bekannter Weise drehenden Pflückwalze eingezogen und die Pflanze durch einen Pflückkanal hindurchgezogen. Dabei werden Nutzteile der Pflanze, wie Maiskolben oder Sonnenblumenfruchtstände, vom Pflückkanal festgehalten und anschließend einer Weiterverarbeitung zugeführt. In der Regel nach einem Teil eines Umlaufs um die Bahn hat die Pflückwalze die gesamte Pflanze eingezogen, und ist zur Aufnahme einer anderen Pflanze frei. Denkbar wäre aber auch, die Pflanze mehrere Umläufe vollführen zu lassen. Anzumerken ist, dass nur die Pflückwalze und das die Pflückwalze halternde Element sich relativ zu den übrigen Teilen der Einzugs- und Pflückeinrichtung bewegen, aber nicht unbedingt der Pflückkanal. Der Pflückkanal selbst ist in der Regel stationär an der Einzugs- und Pflückeinrichtung angebracht.

Auf diese Weise erhält man eine Einzugs- und Pflückeinrichtung, bei der die Pflanzen an verschiedenen Stellen einer von der Pflückwalze vollführten Bewegung von der Pflückwalze aufgenommen werden können. Die Einzugs- und Pflückeinrichtung ist daher in der Lage, die Pflanzenstängel reihenunabhängig zu erfassen. Die Einzugs- und Pflückeinrichtung kann sehr kompakt aufgebaut werden.

Die Bewegung der Pflückwalze kann auf einer beliebigen Bahn erfolgen. Sie kann insbesondere rechteckförmig, elliptisch oder rotativ um eine zweite Achse erfolgen, die sich von der Drehachse der Pflückwalze unterscheidet. Die zweite Achse, um die sich das Halterungselement dreht, muß nicht durch die Pflückwalze verlaufen, sondern ist in der Regel im Abstand von ihr angeordnet. Der Vorzug einer kreisförmigen Bewegung ist ihre unproblematische Realisierbarkeit.

Da die Pflückwalze sich bewegt, insbesondere um die zweite Achse rotiert, kann diese Bewegung genutzt werden, die Pflanze über die Länge des Pflückkanals zu transportieren. Eine separate Antriebseinrichtung, im Stande der Technik verschleissanfällige Ketten, die die Pflanze durch den Pflückkanal verbringt, erübrigt sich somit. Die Pflückwalze kann in diesem Fall auch relativ kurz gestaltet sein, da eine Verschiebung der Pflanze entlang der Längsrichtung der Pflückwalze während des Pflückens aufgrund der Bewegung nicht nötig ist.

Vorzugsweise ist die zweite Achse, um die die Pflückwalze gedreht wird, zumindest näherungsweise vertikal orientiert. Die Drehrichtung ist somit der Wuchsrichtung der meisten Pflanzen angepasst. Denkbar wäre aber auch, die zweite Achse horizontal zu orientieren, um seitlich an einer Pflanze Früchte zu ernten, z. B. Trauben. Analog ist die Drehrichtung der Pflückwalze in der Regel zumindest ungefähr horizontal. Wegen der Drehung der Pflückwalze um die zweite Achse läuft die Rotationsachse der Pflückwalze um die zweite Achse um.

Weiterhin ist vorgeschlagen, die Pflückwalze oder Pflückwalzen am äußerem Umfang eines Halterungselements anzuordnen. Das Halterungselement dreht sich um die zweite Achse, die sich vorzugsweise durch den Mittelpunkt des Halterungselements erstreckt. Das Halterungselement kann mit Einrichtungen zum drehbaren Lagern und zum Antrieb der Pflückwalze bzw. Pflückwalzen ausgestattet sein. Insbesondere können geeignete Zahnräder die Drehbewegung des Halterungselements um die zweite Achse in die Drehbewegung der Pflückwalze oder Pflückwalzen um die erste Achse umsetzen.

Die Pflanzenstängel werden in einen Spalt eingezogen, der in einer bevorzugten Ausführungsform zwischen zwei zusammenwirkenden Pflückwalzen definiert ist. Die Pflückwalzen drehen sich gegensinnig und ziehen einen Pflanzenstängel nach unten ein. Der Spalt kann sich (zumindest etwa) radial zum Halterungselement erstrecken. In diesem Fall muss der Pflanzenstängel in radialer Richtung in den Spalt eingeführt werden. Alternativ kann sich der Spalt in der Drehrichtung des Halterungselements erstrecken, also zumindest näherungsweise tangential zum Umfang des Halterungselements verlaufen. Das Einführen der Pflanze in den Spalt ist somit erleichtert, da die Längsrichtung des Spalts und seine Drehrichtung übereinstimmen. Anzumerken ist, dass auch andere Richtungen des Spaltes, die zwischen der tangentialen und radialen Richtung liegen, möglich sind.

In einer anderen Ausführungsform ist der Spalt, in den die Pflanzenstängel eingezogen werden, zwischen einer rotierenden Pflückwalze und einer festen Wand definiert. Die Wand kann ortsfest sein, sich also nicht mit der Pflückwalze mitdrehen. An einer ortsfesten Wand wird die Pflückwalze durch die Drehung des Halterungselements um die zweite Achse entlanggeführt. Der Spalt ist in diesem Fall kreisbogenförmig. Alternativ ist die feste Wand am Halterungselement der Pflückwalze angeordnet. In diesem Fall kann der Spalt, wie oben erläutert, tangential zum Umfang des Halterungselements, in radialer Richtung oder in einem dazwischen liegenden Winkel orientiert sein.

Um das Einführen der Pflanzen in den Spalt zu erleichtern, ist eine Pflückwalze mit einem an ihrer Spitze angeordneten Schneckenförderer geeignet. Alternativ oder zusätzlich können die Pflückwalzen mit kegelförmigen Spitzen ausgestattet sein, die das Einführen des Pflanzenstängels erleichtern.

Nicht immer wird eine auf dem Feld stehende Pflanze unmittelbar von einem Pflückaggregat, d. h. einer mit einer zweiten Pflückwalze oder einer Wand zusammenwirkenden Pflückwalze, erfasst. Um das Einführen in den Spalt zu erleichtern, bietet sich an, die radial äußere Oberfläche des Halterungselements zwischen zwei aufeinander folgenden Pflückaggregaten geradlinig oder gekrümmt derart zu formen, dass diese Oberfläche an der Pflanze entlanggleiten kann, so dass die Pflanze ohne Widerstand in ein nachfolgendes Pflückaggregat hineingeführt wird.

Weiterhin ist vorgeschlagen, ein rotierendes Einzugselement oberhalb der Pflückeinrichtung vorzusehen, das geeignet ist, Pflanzen reihenunabhängig zu erfassen und in den Pflückkanal einzuführen. Das Einzugselement führt die Pflanze vorzugsweise auch in den Spalt eines Pflückaggregates ein, falls sie von letzterem nicht selbsttätig eingezogen wird. Ein derartiges Einzugselement kann eine Anzahl Finger aufweisen, die sich im wesentlichen in radialer Richtung erstrecken. Die Zahl der Finger stimmt in der Regel mit der Anzahl der Pflückaggregate überein. Vorzugsweise sind die Finger nachlaufend gekrümmt, so dass ihre vorlaufende Oberfläche ein abweisendes Förderverhalten aufweist. Auf diese Weise wird erreicht, dass die Pflanzenstängel um die Spitze der Finger umlaufen und an ihrer nachlaufenden Oberfläche zum Anliegen kommen, die sie ihrerseits aggressiv nach innen fördert. Das Einzugselement ist bei geeignetem Durchmesser eingerichtet, Pflanzen über eine hinreichende Arbeitsbreite zu ergreifen, also reihenunabhängig einzuziehen. Um die Arbeitsbreite weiter zu vergrößern, können der Einzugs- und Pflückeinrichtung auch Stängelteiler vorgeordnet sein.

Das Einzugselement ist vorzugsweise derart angeordnet, dass es die Pflanze über die gesamte wirksame Länge des Pflückkanals transportieren kann. In der Regel erfolgt der Transport der Pflanze durch den Pflückkanal im Zusammenwirken mit der Pflückwalze, die die Pflanze ebenfalls festhält und aufgrund ihrer Drehung um die zweite Achse über die Länge des Pflückkanals transportiert.

Ein Abstreifblech, in das der Pflückkanal eingebracht ist, ist vorzugsweise oberhalb der Pflückwalze angeordnet. Es ist in der Regel ortsfest. Das Einzugselement befindet sich zweckmäßigerweise oberhalb des Abstreifblechs. Es bietet sich aus konstruktiven Gründen und zur Verbesserung des Transports der Pflanzen an, das Einzugselement und das Halterungselement der Pflückwalze um koaxiale Achsen rotieren zu lassen.

Wie bereits dargelegt, transportiert die Pflückwalze die Pflanze bei ihrer Drehung um die zweite Achse auf einer Kreisbahn. Die Pflanze wird dabei durch den Pflückkanal hindurchgezogen. Um ein unvorteilhaftes Verbiegen der Pflanze zu vermeiden, wird vorgeschlagen, dass der Pflückkanal ebenfalls bogenförmig, insbesondere entsprechend der Bahn der Pflückaggregate kreisbogenförmig, verläuft.

Die erfindungsgemäße Einzugs- und Pflückeinrichtung ist zur Verwendung in Erntegutbergungsvorrichtungen vorgesehen. Eine derartige Erntegutbergungsvorrichtung, die auch als Maispflücker bezeichnet wird, dient zur Ernte von Gutarten, wie Mais und Sonnenblumen, deren Nutzteile von Pflanzenresten getrennt werden.

Insbesondere bei relativ breiten Erntegutbergungsvorrichtungen bietet sich an, beidseits einer Symmetrielinie, die in der Regel mit der Mittellinie der Erntegutbergungsvorrichtung zusammenfällt, zueinander symmetrische Einzugs- und Pflückeinrichtungen vorzusehen. Die Symmetrie ermöglicht eine gleichmäßige Gewichtsverteilung, die unerwünschte Drehmomente auf die Maschine, an der die Erntegutbergungsvorrichtung befestigt ist, vermeidet.

Obwohl die Einzugs- und Pflückeinrichtung reihenunabhängig arbeitet, kann es sinnvoll sein, sie in an sich bekannter Weise an der Erntegutbergungsvorrichtung seitlich verschiebbar (verstellbar) anzubringen. Gegebenenfalls können die Abstreifbleche benachbarter Einzugs- und Pflückeinrichtungen sich überdecken, so dass beim Verschieben keine unerwünschten Lücken zwischen ihnen entstehen. Alternativ oder zusätzlich können zusätzliche Abdeckbleche zwischen benachbarten Einzugs- und Pflückeinrichtungen eventuell verbleibende Lücken schließen.

Schließlich sind unterschiedlich hoch angebrachte benachbarte Einzugs- und Pflückeinrichtungen denkbar, um den Minimalabstand zwischen ihnen zu reduzieren.

In den Zeichnungen sind nachfolgend näher beschriebene Ausführungsbeispiele der Erfindung dargestellt. Es zeigt:
- Fig. 1: eine Seitenansicht einer Einzugs- und Pflückeinrichtung einer Erntegutbergungsvorrichtung;
- Fig. 2: eine Draufsicht auf die Einzugs- und Pflückeinrichtung aus Figur 1;
- Fig. 3: eine Hälfte einer Erntegutbergungsvorrichtung mit mehreren Einzugs- und Pflückeinrichtungen, die den in Figur 1 und 2 dargestellten entsprechen;
- Fig. 4: eine Draufsicht auf die Pflückeinrichtung der Einzugs- und Pflückeinrichtung aus Figur 1;
- Fig. 5: eine Draufsicht auf eine zweite Ausführungsform einer Pflückeinrichtung;
- Fig. 6: eine Draufsicht auf eine dritte Ausführungsform einer Pflückeinrichtung;
- Fig. 7: eine Draufsicht auf Einzugs- und Pflückeinrichtung mit einer vierten Ausführungsform der Pflückeinrichtung;

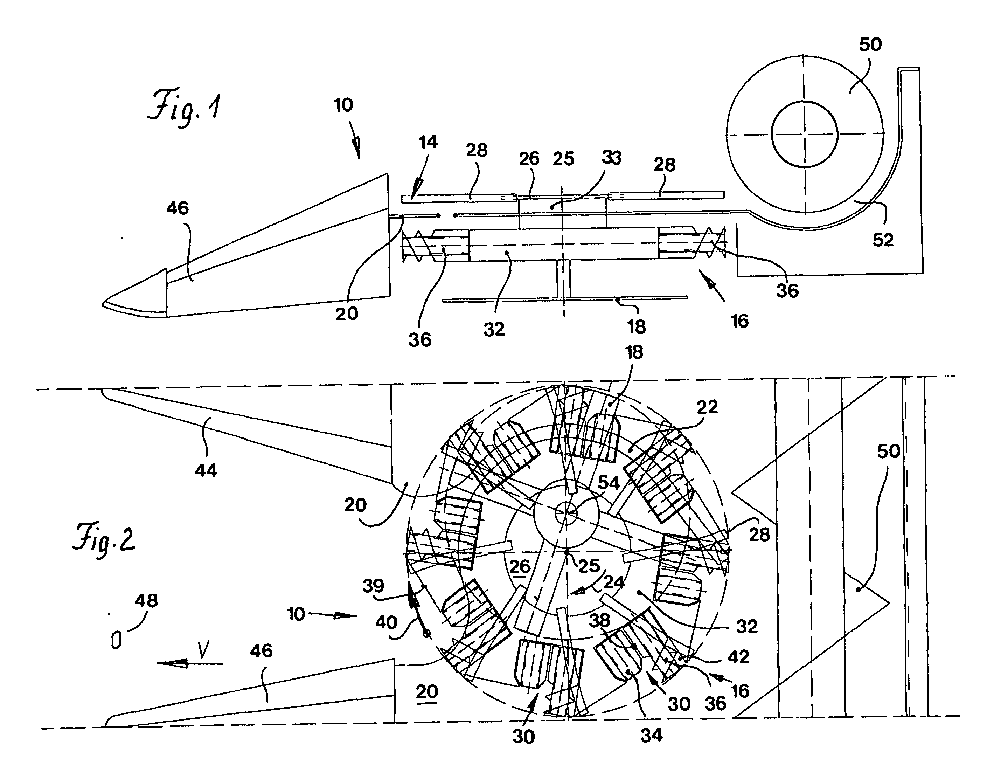

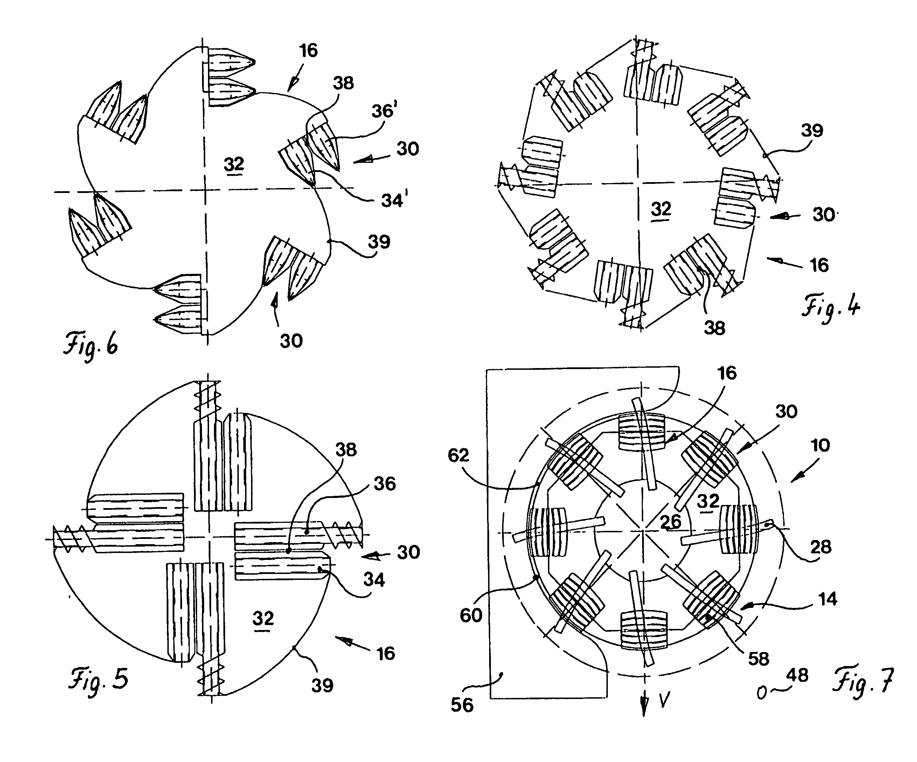

In Figur 1 ist eine Einzugs- und Pflückeinrichtung 10 einer Erntegutbergungsvorrichtung dargestellt. Eine Erntegutbergungsvorrichtung 12, wie sie in Figur 7 dargestellt ist, weist in der Regel eine Mehrzahl von Einzugs- und Pflückeinrichtungen 10 auf, obwohl auch denkbar wäre, eine Erntegutbergungsvorrichtung 12 mit nur einer einzelnen Einzugs- und Pflückeinrichtung 10 zu versehen. Die Einzugs- und Pflückeinrichtung 10 besteht in ihrem grundsätzlichen Aufbau aus einem oberen Einzugselement 14, das zum Erfassen und Einziehen der zu erntenden Pflanze dient, sowie einem drehbaren Häckselmesser 18 und einer Pflückeinrichtung 16, die unterhalb eines in einem Abstreifblech 20 eingebrachten Pflückkanals 22 angeordnet sind.

Das obere Einzugselement 14 ist um eine vertikal verlaufende Achse 25 drehbar angeordnet und wird durch einen - in den Zeichnungen nicht erkennbaren - Antrieb in Rotation versetzt. Die Drehung erfolgt in Figur 2 im Uhrzeigersinn, wie durch den Pfeil 24 angedeutet. Das obere Einzugselement 14 ist oberhalb des Abstreifblechs 20 angeordnet. Die Drehachse 25 des oberen Einzugselements 14 verläuft im wesentlichen vertikal, sie kann aber auch leicht nach vorn geneigt sein. Das obere Einzugselement 14 besteht in seinem grundsätzlichen Aufbau aus einer zentralen Scheibe 26 mit über ihren Umfang verteilten, sich im wesentlichen radial erstreckenden Fingern 28, die in der Ebene der Scheibe 26 entgegen der Drehrichtung, also nachlaufend gekrümmt sind. Die vorlaufenden Kanten der Finger 28 haben daher ein abweisendes Förderverhalten. Alternativ oder zusätzlich zur Krümmung der Finger 28 wäre eine radiale Bewegung der Finger denkbar, wie sie von Schneidwerken her bekannt ist, und durch eine Exzentersteuerung erzielt werden kann, um ein abweisendes Förderverhalten zu erzielen. Auch eine Steuerung des Winkels des Fingers relativ zu einer vertikal verlaufenden Achse, also ein Schwenken, wäre denkbar, um ein gewünschtes Förderverhalten zu erzielen. Die Schwenkbewegung ließe sich auch mit der radialen Bewegung kombinieren.

Unterhalb des oberen Einzugselements 14 und des Abstreifblechs 20 ist die Pflückeinrichtung 16 angeordnet. Sie umfasst mehrere Pflückaggregate 30, die umlaufend azimutal um ein zentrales Halterungselement 32 verteilt sind. Die Pflückaggregate 30 weisen jeweils ein Paar von Pflückwalzen 34, 36 auf, deren Längsachsen zueinander zumindest näherungsweise parallel und im wesentlichen radial zum zentralen Halterungselement 32 orientiert sind. Der zwischen den jeweils zusammengehörenden Pflückwalzen 34, 36 verbleibende Spalt 38 ist somit ebenfalls radial orientiert. Die Pflückwalzen 34, 36 drehen sich um ihre Längsachsen, haben jedoch unterschiedliche Drehrichtungen, so dass sie einen in den Spalt 38 eingeführten - oder gelangenden - Pflanzenstängel zwischen sich nach unten einziehen. Außerdem dreht sich die Pflückeinrichtung 16 in Richtung des Pfeils 40 um ihre durch das zentrale Halterungselement 32 verlaufende, vertikal orientierte Mittelachse. Diese Mittelachse stimmt mit der Achse 25 überein, um die sich das obere Einzugselement 14 dreht.

Die Anzahl der Finger 28 des oberen Einzugselements 14 und der Pflückaggregate 30 der Pflückeinrichtung 16 stimmen überein; in der in Figur 1 und 2 dargestellten Ausführungsform sind je acht von ihnen vorhanden. Die Finger 28 sind jeweils kurz hinter einer nachlaufenden Pflückwalze 30 angeordnet, so dass sie einen im Spalt 38 eingeklemmten Pflanzenstängel 48 abstützen können. Die Drehgeschwindigkeiten der Pflückeinrichtung 16 und des oberen Einzugselements 14 sind in der Regel gleich, können aber auch geringfügig unterschiedlich gewählt sein. Antriebseinrichtungen für die Pflückwalzen 34, 36 sind im Inneren des zentralen Halterungselements 32 angeordnet, die durch geeignete Kegel-Zahnräder odgl. die Drehbewegung des zentralen Halterungselements 32 in Drehbewegungen der Pflückwalzen 34, 36 umwandeln. Zwischen der zentralen Scheibe 26 des oberen Einzugselements 14 und dem zentralen Halterungselement 32 ist ein Gehäuse 33 vorgesehen, in dem Antriebselemente für die Pflückeinrichtung 16 und/oder das Einzugselement 14 enthalten sein können.

Die in Drehrichtung 40 der Pflückeinrichtung 16 jeweils nachlaufende Pflückwalze 36 eines Pflückaggregates 30 weist einen äußeren Abschnitt 42 auf, der über das äußere Ende der jeweils anderen, in Drehrichtung 40 vorlaufenden Pflückwalze 34 übersteht. Der äußere Abschnitt 42 ist in der Art eines Schneckenförderers mit wendelförmigen Mitnehmern versehen, um einen Pflanzenstängel in den Spalt 38 zwischen den Pflückwalzen 32, 34 einzuziehen. Der verbleibende, innere Abschnitt der nachlaufenden Pflückwalze 34 und die vorlaufende Pflückwalze 34 sind in an sich bekannter Weise gestaltet, d. h. mit mehreren axial verlaufenden, radial nach außen überstehenden Mitnehmern ausgestattet, die einen Pflanzenstängel nach unten einziehen können. Am äußeren Ende der Pflückwalzen 34, 36 ist dieser Mitnehmer abgeschrägt, um das Einführen des Pflanzenstängels in den Spalt 38 zu erleichtern. Das zentrale Halterungselement 32 weist zwischen jeweils zwei aufeinander folgenden Pflückaggregaten 30 eine radial äußere Oberfläche 39 auf, die sich zwischen der äußeren Spitze des äußeren Abschnitts 42 der nachlaufenden Pflückwalze 36 eines vorlaufenden Pflückaggregats 30 und der äußeren Spitze der vorlaufenden Pflückwalze 34 eines nachlaufenden Pflückaggregats 30 erstreckt. Die Oberfläche 39 bewirkt, dass ein Pflanzenstängel 48 an ihr entlanggleiten (bzw. sie am Pflanzenstängel 48 entlanggleiten) und in den Spalt 38 des nachlaufenden Pflückaggregats 30 eindringen kann.

Wie anhand der in Figur 2 dargestellten Draufsicht auf die Einzugs- und Pflückeinrichtung 10 erkennbar ist, sind dem Einzugselement 14 und der Pflückeinrichtung 16 in Vorwärtsbewegungsrichtung V der Erntegutbergungsvorrichtung Stängelteiler 44, 46 vorgeordnet, die Pflanzen, welche nicht genau vor dem Einzugselement 14 stehen, während der Vorwärtsbewegung jeweils nach innen drücken bzw. biegen, so dass sie in den Wirkbereich des Einzugselements 14 und der Pflückeinrichtung 16 gelangen. Auch die in Vorwärtsbewegungsrichtung vorlaufende Kante des Abstreifblechs 20 ist derart gekrümmt, dass die Pflanzenstängel 48 seitlich in den Wirkbereich des Einzugselements 14 und der Pflückeinrichtung 16 gedrückt werden. Der Wirkbereich des Einzugselements 14 wird durch die Länge der Finger 28 definiert und ist derart groß, dass die Einzugs- und Pflückeinrichtung 10 - im Zusammenwirken mit der gekrümmten vorlaufenden Kante des Abstreifblechs 20 und den Stängelteilern 44, 46 - reihenunabhängig arbeitet.

Anhand der Figur 2 ist die Wirkungsweise des Einzugselements 14 und der Pflückeinrichtung 16 erkennbar. In der Regel gleitet ein Pflanzenstängel 48 einer auf dem Feld stehenden Pflanze, nachdem er abhängig von seiner seitlichen Position gegebenenfalls durch die Stängelteiler 44, 46 und/oder die vorlaufende Kante des Abstreifblechs 20 in Richtung auf die Mitte der Einzugs- und Pflückeinrichtung 10 zu verbogen wurde, unmittelbar, ohne in Kontakt mit einem Finger 28 des Einzugselements 14 zu gelangen, an der äußeren Oberfläche 39 des zentralen Halterungselements 32 entlang, bis er vom äußeren Abschnitt 42 einer nachlaufenden Pflückwalze 36 erfasst und durch den Mitnehmer am äußeren Abschnitt 42 der rotierenden Pflückwalze 36 in den Spalt 38 des Pflückaggregats 30 eingezogen wird. Denkbar ist aber auch, dass der Pflanzenstängel 48 zuerst mit einem Finger 28 des oberen Einzugselements 14 in Berührung gerät. Wegen der nachlaufenden, und daher abweisenden Krümmung des Fingers 28 wird der Pflanzenstängel 48 dann radial nach außen gedrückt, bis er die Spitze des Fingers 28 umrundet hat. Der Pflanzenstängel 48 gleitet dann aufgrund der Drehung des Einzugselements 14 und der Pflückeinrichtung 16 an der äußeren Oberfläche 39 des zentralen Halterungselements 32 entlang und wird dann vom äußeren Abschnitt 42 der jeweils nachlaufenden Pflückwalze 36 eines Pflückaggregates 30 erfasst und von den rotierenden Pflückwalzen 34, 36 nach unten eingezogen. In der Regel wird dabei der noch nicht vom Boden des Feldes getrennte Pflanzenstängel 48 seitlich und/oder in Vorwärtsbewegungsrichtung V verbogen.

Das Abstreifblech 20 ist vertikal zwischen dem oberen Einzugselement 14 und der Pflückeinrichtung 16 angeordnet. Im Abstreifblech 20 ist der sich entgegen der Vorwärtsfahrtrichtung V zunächst verengende, und dann kreisbogenförmig seitlich neben der Drehachse 25 des Einzugselements 14 und der Pflückeinrichtung 16 nach hinten verlaufende Pflückkanal 22 vorgesehen. Der Pflückkanal 22 wird über seine gesamte Länge vom Drehbereich des Einzugselements 14 und der Pflückeinrichtung 16 überdeckt. Der Anfang (Eintritt) des Pflückkanals 22 liegt bezüglich der Vorwärtsbewegungsrichtung vor der Drehachse 25 des Einzugselements 14 und der Pflückeinrichtung 16. Denkbar wäre, anstelle des Abstreifblechs 20 eine rotierende Pflückscheibe mit zumindest einem in Drehrichtung umlaufenden Pflückspalt oberhalb der Pflückwalze anzuordnen. Der Pflückspalt der Pflückscheibe mündet am Außenumfang der Pflückscheibe offen aus. Weiterhin kann die Pflückscheibe oberseitig bereichsweise von einer Abdeckeinrichtung übergriffen sein, die einen Förderkanal zum Abtransport der abgerissenen Nutzteile der Pflanzen zum Erntefahrzeug aufweist. In dieser Ausführungsform dient die Pflückscheibe zum Erfassen der Pflanzen und gleichzeitig zum Pflücken, wobei die Pflückwalze den Stängel der Pflanze nach unten einzieht. Eine derartige Pflückscheibe ist in der DE 199 39 723 offenbart, deren Offenbarung durch Verweis hierin aufgenommen wird.

Ein von einem Pflückaggregat 30 erfasster Pflanzenstängel 48 wird durch die gegensinnige Drehbewegung der Pflückwalzen 34, 36 nach unten eingezogen. Durch die Rotation der Pflückeinrichtung 16 um die Hochachse wird der Pflanzenstängel 48 gleichzeitig (bezüglich der Figur 2 im Uhrzeigersinn entlang des Pfeils 40) in Drehrichtung mitgeführt, so dass ein oberhalb des Pflückaggregats 30 und unterhalb des oberen Einzugselements 14 liegender Teil des Pflanzenstängels 48 in den Pflückkanal 22 des Abstreifblechs 20 eingeführt wird. Die Breite des Pflückkanals 22 ist derart gewählt, dass Nutzteile von Pflanzen, insbesondere Maiskolben, Sonnenblumenfruchtstände, etc., durch das Abstreifblech 20 vom Pflanzenstängel 48 getrennt werden. Die Nutzteile der Pflanzen werden dann in eine unterhalb eines quer zur Vorwärtsbewegungsrichtung V verlaufenden Schneckenförderers 50 liegende Mulde 52 gefördert. Das kann durch einen Kanal geschehen, der in einer entsprechenden Abdeckung vorgesehen ist, die oberhalb des Abstreifblechs 20 angeordnet ist. Die Abdeckung schützt außerdem das obere Einzugselement 14 vor unbeabsichtigter Berührung. Das obere Einzugselement 14 und nachfolgende Nutzteile von Pflanzen unterstützen den Transport der Nutzteile in die Mulde. Der Schneckenförderer 50 verbringt die Nutzteile der Pflanzen aus der Mulde 52 in eine an sich bekannte und daher in den Figuren nicht wiedergegebene Maschine, in der sie weiter verarbeitet werden, wie einen Mähdrescher mit einer Drescheinrichtung, einen Feldhäcksler mit einer Häckseleinrichtung, oder zu einer Einrichtung, die sie in einem Anhänger odgl. zuführt.

Während des Pflückvorgangs sorgen das obere Einzugselement 14 und die ebenfalls rotierende Pflückeinrichtung 16 dafür, dass der Pflanzenstängel 48 über die Länge des Pflückkanals 22 transportiert wird. Der Pflanzenstängel 48 ist im Spalt 38 zwischen jeweils zwei Pflückwalzen 34, 36 eingeklemmt und wird in der Regel während des größten Teils des Pflückvorgangs zusätzlich durch einen Finger 28 des oberen Einzugselements 14 abgestützt. Die Drehzahlen der Pflückwalzen 34, 36 und des Einzugselements 14 sowie der Pflückeinrichtung 16 sind vorzugsweise derart bemessen, dass die gesamte Pflanze in den Pflückkanal 22 nach unten eingezogen ist, wenn sie das Ende des Pflückkanals 22 erreicht hat.

Die Reste der Pflanzenstängel 48, die von den Pflückwalzen 34, 36 nach unten abtransportiert werden, gelangen in den Wirkungsbereich eines unterhalb der Pflückeinrichtung 16 rotierenden vierarmigen Häckselmessers 18 und werden durch dieses in einzelne Stücke zerteilt. Auf dem Feld werden somit gehäckselte Pflanzenreste abgelegt. Dabei wird der im Spalt 38 des Pflückaggregats 30 eingeklemmte Pflanzenstängel 48 durch die Pflückeinrichtung 16 abgestützt, die eine Gegenschneide bildet. Das Häckselmesser 28 rotiert um eine vertikal verlaufende Drehachse 54, die bezüglich der Vorwärtsbewegungsrichtung V seitlich zwischen der Drehachse 25 des Einzugselements 14 und der Pflückeinrichtung 16 einerseits und dem Pflückkanal 22 andererseits angeordnet ist. In vertikaler Richtung ist das Häckselmesser 28 unterhalb der Pflückwalzen 34, 36 positioniert. Die Drehrichtung des Häckselmessers 28 ist, betrachtet man Figur 2, im Uhrzeigersinn, so dass das gehäckselte Gut seitlich nach hinten geschleudert wird. Der Wirkungsbereich des Häckselmessers 18 erstreckt sich im wesentlichen über die gesamte Länge des Pflückkanals 22. Er ist derart dimensioniert, dass die Pflanzenstängel 48 zuerst zwischen den Pflückwalzen 34, 36 eingeklemmt und dann vom Häckselmesser 18 geschnitten werden.

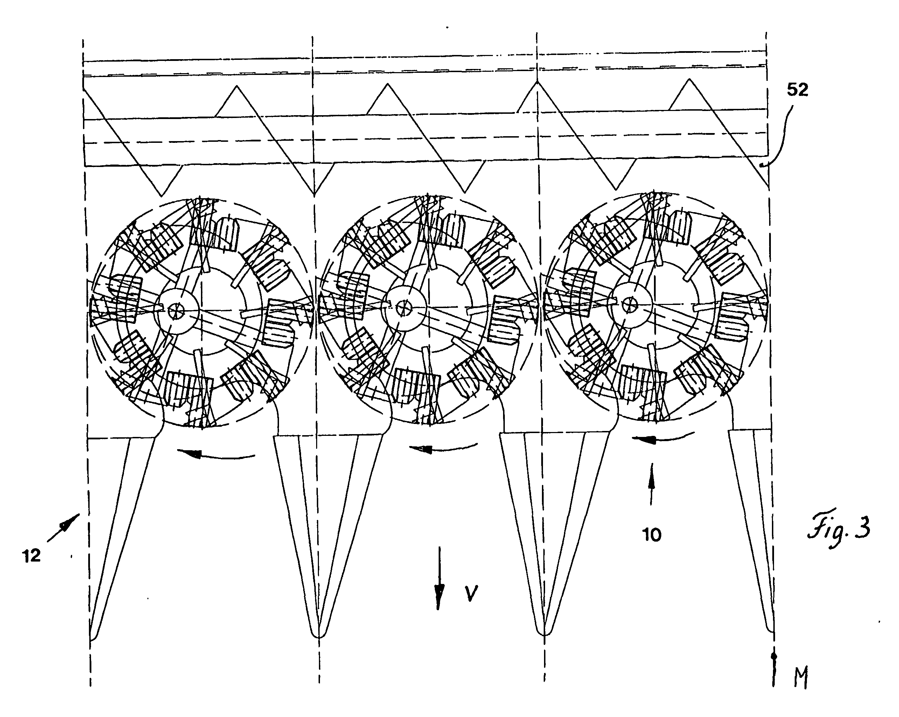

Figur 3 zeigt eine Hälfte einer Erntegutbergungsvorrichtung 12 mit insgesamt sechs Einzugs- und Pflückeinrichtungen 10, die denen der Figuren 1 und 2 entsprechen. Alle in Figur 3 dargestellten Pflückkanäle 22 sind bezüglich der Vorwärtsbewegungsrichtung V rechtsseitig der Drehachsen 25 der Einzugselemente 14 angeordnet. Der Schneckenförderer 52 fördert die Nutzteile der Pflanzen in die Richtung der Mittelachse M der Erntegutbergungseinrichtung 12, von wo aus sie zur weiteren Verarbeitung abtransportiert werden. An der Rückseite der Erntegutbergungsvorrichtung 12 kann daher - in der Regel mittig - ein Schrägförderer eines Mähdreschers oder der Einzugsbereich eines Feldhäckslers angeordnet sein. Die rechts der Mittelachse M angeordneten, in Figur 3 nicht mit dargestellten drei Einzugs- und Pflückeinrichtungen 10 können symmetrisch zu den in Figur 3 dargestellten sein, also in entgegengesetzten Drehrichtungen rotieren, was eine symmetrische Drehmomentsbelastung des Erntefahrzeugs zur vorteilhaften Folge hat. Es können auch mehr oder weniger als drei Einzugs- und Pflückeinrichtungen 10 beidseits der Mittelachse M vorhanden sein, wobei vorzugsweise gleiche Anzahlen von Einzugs- und Pflückeinrichtungen beidseits der vertikalen Längsmittelebene der Erntegutbergungseinrichtung 12 angeordnet sind. Die Einzugs- und Pflückeinrichtungen rotieren dann zweckmäßigerweise auf der einen Seite der vertikalen Längsmittelebene im Uhrzeigersinn, auf der anderen Seite im Gegenuhrzeigersinn. Es ist aber auch denkbar, alle Einzugs- und Pflückeinrichtungen 10 gleichartig zu wählen, wobei als vorteilhaft anzusehen ist, dass alle Einzugs- und Pflückeinrichtungen 10 gleichartig sind, was niedrige Herstellungskosten ermöglicht.

Zum Antrieb des Häckselmesser 18, des Einzugselements 14 und der Pflückeinrichtung kann ein in den Zeichnungen nicht dargestelltes Getriebe vorgesehen sein, welches durch eine ebenfalls nicht eingezeichnete, durchgehende Antriebswelle angetrieben wird. Es ist denkbar, für eine Erntegutbergungseinrichtung 12 insgesamt nur eine - durchgehende - Antriebswelle zu verwenden, obwohl es sich meist als zweckmäßig erweist, beidseits der Einzugseinrichtung einer selbstfahrenden Erntemaschine jeweils eine separat von der Erntemaschine angetriebene Antriebswelle vorzusehen. Die Einzugs- und Pflückeinrichtung 10 ist vorzugsweise seitlich verschiebbar an einem (ebenfalls in der Figuren nicht eingezeichneten) Träger angebracht, der sich über die Breite einer Erntegutbergungseinrichtung 12 erstreckt. Dazu kann eine Befestigungseinrichtung, die das Getriebe, die Pflückeinrichtung 16, das Abstreifblech 20 mit den Stängelteilern 44, 46 und das Einzugselement 14 haltert, verschiebbar am Träger befestigt sein. Beim Verschieben eventuell entstehender Zwischenräume zwischen Abstreifblechen 20 benachbarter Einzugs- und Pflückeinrichtungen 10 können dabei durch geeignete Bleche odgl. abgedeckt sein.

Figur 4 zeigt nochmals die in den Figuren 1 bis 3 wiedergegebene Pflückeinrichtung 16. Sie weist acht Pflückaggregate 30 auf, die jeweils einen radial verlaufenden Spalt 38 zum Einziehen eines Pflanzenstängels 48 definieren. Die radial äußere Oberfläche 39 des zentralen Halterungselements 32 zwischen benachbarten Pflückaggregaten 30 ist derart geformt, dass ein Pflanzenstängel 48 selbsttätig in einen nachfolgenden Spalt 38 eingeführt wird. Sie erstreckt sich geradlinig von der Spitze einer nachlaufenden Pflückwalze 36 eines vorlaufenden Pflückaggregats 30 zur Spitze einer vorlaufenden Pflückwalze 36 eines nachfolgenden Pflückaggregats 30.

In Figur 5 ist eine zweite Ausführungsform einer Pflückeinrichtung 16 wiedergegeben. Es sind vier gleichförmig um den Umfang des zentralen Halterungselements 32 verteilte Pflückaggregate 30 vorhanden, die in ihrem grundsätzlichen Aufbau den in Figur 4 dargestellten Pflückaggregaten entsprechen. Die Spalte 38 verläuft ebenfalls näherungsweise radial auf die Drehachse der Pflückeinrichtung 16 zu. Die einzelnen Pflückwalzen 34, 36 sind etwa 2,5 mal so lang wie die-in Figur 4 dargestellten, und haben im wesentlichen den gleichen Durchmesser. Die gegenüber der Ausführungsform in Figur 4 größere Länge der Pflückwalzen 34, 36 ist aus Platzgründen mit einer Verminderung der Anzahl der Pflückaggregate 30 verbunden.

Da wegen der größeren Länge aber mehrere Pflanzenstängel 48 gleichzeitig von einem Pflückaggregat 30 verarbeitet werden können, ist die Kapazität etwa gleich, der konstruktive und mechanische Aufwand aber gegenüber der in Figur 4 dargestellten Ausführungsform vermindert. Die radial äußere Oberfläche 39 des Halterungselements 32 zwischen den Pflückaggregaten 30 erstreckt sich jeweils bogenförmig zwischen der äußeren Spitze einer nachlaufenden Pflückwalze 36 eines vorlaufenden Pflückaggregats 30 und der äußeren Spitze der vorlaufenden Pflückwalze 34 eines nachfolgenden Pflückaggregats 30.

Eine dritte Ausführungsform einer Pflückeinrichtung 16 ist in Figur 6 dargestellt. Es sind sechs Pflückaggregate 30 um den Umfang des zentralen Halterungselements 32 verteilt. Die Pflückwalzen 34', 36' jedes Pflückaggregats 30 und die zwischen ihnen verbleibenden Spalte 38 sind gegenüber den zuvor diskutierten Ausführungsformen um 90 Grad verdreht. Die Pflückwalzen 34', 36' haben somit Längsachsen, die tangential zum Umfang des Halterungselements 32 verlaufen. Beide Pflückwalzen 34', 36' jedes Pflückaggregates 30 sind in ihrem äußeren Endbereich kegelförmig angespitzt, um das Einziehen eines Pflanzenstängels 48 in den Spalt 38 zu erleichtern. Die radial äußere Oberfläche 39 des zentralen Halterungselements 32 erstreckt sich bogenförmig zwischen dem Ende einer äußeren Pflückwalze 36' eines vorlaufenden Pflückaggregats 30 und der äußeren Spitze der inneren Pflückwalze 34' eines nachfolgenden Pflückaggregats 30, um ein selbsttätiges Einziehen eines Pflanzenstängels 48 zu erleichtern. Bei dieser Ausführungsform ist das Erfassen eines Pflanzenstängels 48 erleichtert, da die Längsrichtung des Spalts 38, in den er eingezogen wird, und die Bewegungsrichtung der Pflückeinrichtung 16 übereinstimmen. Die Pflückeinrichtungen 16 gemäß der zweiten und dritten Ausführungsform können in den in den Figuren 1 bis 3-gezeigten, ansonsten ungeänderten Einzugs- und Pflückeinrichtungen 10 verwendet werden.

In Figur 5 ist eine Einzugs- und Pflückeinrichtung 10 mit einer vierten Ausführungsform einer Pflückeinrichtung 16 wiedergegeben. Oberhalb der Pflückeinrichtung 16 ist ein oberes Einzugselement 14 angeordnet, das dem in den Figuren 1 bis 3 gezeigten entspricht. Unterhalb des Einzugselements 14 ist die Pflückeinrichtung 16 angeordnet, die acht Pflückwalzen 58 aufweist. Die Pflückwalzen 58 sind tonnenförmig gestaltet und mit einer Oberfläche mit axial verlaufenden Mitnehmern versehen. Die Pflückwalzen 58 sind über den Umfang des zentralen Halterungselements 32 verteilt. Ihre Längsachsen verlaufen tangential zum Umfang des Halterungselements 32. Die Pflückwalzen 58 sind rotativ angetrieben und drehen sich derart um ihre Längsachsen, dass sich der jeweils außen befindliche Teil der Pflückwalze 58 nach unten bewegt. Das Einziehen eines Pflanzenstängels 48 erfolgt im Zusammenwirken mit einer feststehenden, unterhalb des Abstreifblechs 20 angeordneten Wand 60 eines Gehäuses 56. Die Wand 60 umschließt einen Teil des Umfangs der Pflückeinrichtung 16 kreisbogenförmig, so dass zwischen ihr und den Pflückwalzen 58 ein halbkreisförmiger Spalt 62 zumindest näherungsweise konstanter Breite verbleibt. Die Krümmung der Wand 60 und der tonnenförmigen Pflückwalzen 58 sind aneinander angepasst. Die Pflückwalzen 58 ziehen die Pflanzenstängel 48 in den Spalt 62 ein. Oberhalb der Pflückeinrichtung 16 und unterhalb des Einzugselements 14 ist das Abstreifblech 20 mit dem Pflückkanal 22 angeordnet. Der Verlauf des Pflückkanals 22 entspricht in dieser Ausführungsform der Erfindung dem kreisbogenförmigen Verlauf des Spalts 62.

Die Wirkungsweise der Einzugs- und Pflückeinrichtung 10 gemäß Figur 7 ist folgendermaßen. Bei Vortrieb der Erntemaschine, an der die Einzugs- und Pflückeinrichtung 10 angebracht ist, wird ein Pflanzenstängel 48 von der vorlaufenden Fläche eines Fingers 28 des Einzugselements 14 erfasst und im Zusammenwirken mit der entsprechend gekrümmten Vorderkante des Abstreifblechs 20 in den Pflückspalt 22 (s. Figur 2) und in den Spalt 62 gedrückt. Möglicherweise umrundet der Pflanzenstängel 48 auch die Spitze des Fingers 28 und kommt an der Rückseite des Fingers 28 zum Anliegen, die nach innen gekrümmt ist und aggressiv fördert. Denkbar wäre, auch bei den anderen Ausführungsformen der Erfindung, eine andere Form des Fingers 28 zu wählen, insbesondere eine mit einer Vorderseite mit aggressivem Förderverhalten. Ist der Pflanzenstängel 48 im Spalt 62, wird er von einer Pflückwalze 58 der um die Hochachse rotierenden Pflückeinrichtung 16 erfasst und nach unten eingezogen. Dabei werden Nutzteile der Pflanzen durch das Abstreifblech 20 abgetrennt und abtransportiert, beispielsweise der Mulde 52 des Schneckenförderers 50 zugeführt. Es könnte sich als zweckmäßig erweisen, die Pflückwalzen 58 mit Mitteln zum Erfassen und Halten eines Pflanzenstängels 48 zu versehen, beispielsweise überstehenden Mitnehmern, oder sie als Zahnwalze zu gestalten. Dadurch würde es möglich, einen Pflanzenstängel 48 schon stromauf des Spalts 62 mit den Pflückwalzen 58 zu erfassen.

## Patentansprüche

1. Einzugs- und Pflückeinrichtung (10), die wenigstens eine um eine erste Achse rotierende Pflückwalze (34, 36, 58) aufweist, welche eingerichtet ist, Pflanzen durch einen Pflückkanal (22) zu ziehen, durch den Teile von den Pflanzen abgetrennt werden, **dadurch gekennzeichnet, dass** die Pflückwalze (34, 36, 58) an einem sich bewegenden Element befestigt ist.

2. Einzugs- und Pflückeinrichtung nach Anspruch 1, **dadurch gekennzeichnet, dass** sich das bewegbare Element um eine zweite Achse (25) dreht, die sich von der ersten Achse unterscheidet.

3. Einzugs- und Pflückeinrichtung (10) nach Anspruch 1 oder 2, **dadurch gekennzeichnet, dass** die Pflückwalze (34, 36, 58) eingerichtet ist, die Pflanzen über die Länge des Pflückkanals (22) zu transportieren.

4. Einzugs- und Pflückeinrichtung (10) nach einem der Ansprüche 2 oder 3, **dadurch gekennzeichnet, dass** die zweite Achse (25) zumindest näherungsweise vertikal verläuft.

5. Einzugs- und Pflückeinrichtung (10) nach einem der Ansprüche 1 bis 4, **dadurch gekennzeichnet, dass** die Pflückwalze (34, 36, 58) sich um eine wenigstens näherungsweise horizontal verlaufende Achse dreht.

6. Einzugs- und Pflückeinrichtung (10) nach einem der vorhergehenden Ansprüche, **dadurch gekennzeichnet, dass** das bewegbare Element ein Halterungselement (32) ist, an dem die wenigstens eine Pflückwalze (34, 36, 58) oder mehrere Pflückwalzen (34, 36, 58) außen angeordnet ist oder sind.

7. Einzugs- und Pflückeinrichtung (10) nach Anspruch 6, **dadurch gekennzeichnet, dass** zwischen einer ersten Pflückwalze (34) und einer ihr zugeordneten, gegenläufig drehenden zweiten Pflückwalze (36) ein Spalt (38) definiert ist, der sich wenigstens näherungsweise radial zum Halterungselement (32) oder tangential zum Umfang des Halterungselements (32) erstreckt.

8. Einzugs- und Pflückeinrichtung (10) nach Anspruch 6, **dadurch gekennzeichnet, dass** zwischen einer Pflückwalze (58) und einer festen Wand (60) ein Spalt (62) definiert ist, der sich tangential oder radial zum Umfang des Halterungselements (32) erstreckt.

9. Einzugs- und Pflückeinrichtung (10) nach Anspruch 8, **dadurch gekennzeichnet, dass** die feste Wand (60) am Halterungselement (32) oder ortsfest angeordnet ist.

10. Einzugs- und Pflückeinrichtung (10) nach einem der vorhergehenden Ansprüche, **dadurch gekennzeichnet, dass** eine Pflückwalze (34, 36) eine kegelförmige Spitze oder einen äußeren Abschnitt (42) aufweist, der mit einem wendelförmigen Mitnehmer versehen ist, um einen Pflanzenstängel einzuziehen.

11. Einzugs- und Pflückeinrichtung (10) nach einem der Ansprüche 6 bis 10, **dadurch gekennzeichnet, dass** das Halterungselement (32) zwischen aufeinander folgenden Pflückaggregaten (30) eine radial äußere Oberfläche (39) aufweist, die geradlinig geformt oder gekrümmt ist, um einen Pflanzenstängel (48) in ein nachfolgendes Pflückaggregat (30) einzuführen.

12. Einzugs- und Pflückeinrichtung (10) nach einem der vorhergehenden Ansprüche, **gekennzeichnet durch** ein rotierendes oberes Einzugselement (14) mit vorzugsweise abweisendem Förderverhalten, das oberhalb der Pflückeinrichtung (16) angeordnet und eingerichtet ist, Pflanzen reihenunabhängig zu erfassen und in den Pflückkanal (16) einzuführen.

13. Einzugs- und Pflückeinrichtung (10) nach Anspruch 12, **dadurch gekennzeichnet, dass** das obere Einzugselement (14) eingerichtet ist, die Pflanze über die wirksame Länge des Pflückkanals (22) zu transportieren.

14. Einzugs- und Pflückeinrichtung (10) nach einem der vorhergehenden Ansprüche, **dadurch gekennzeichnet, dass** ein Abstreifblech (20) mit darin angeordnetem Pflückkanal (22) oberhalb der Pflückeinrichtung (16) angeordnet ist.

15. Einzugs- und Pflückeinrichtung (10) nach einem der vorhergehenden Ansprüche, **dadurch gekennzeichnet, dass** der Pflückkanal (22) bogenförmig verläuft.

16. Erntegutbergungsvorrichtung (12) mit einer Einzugs- und Pflückeinrichtung (10) nach einem der vorhergehenden Ansprüche.

## Claims

1. An infeed and plucking device (10) which comprises at least one plucking roller (34, 36, 58) which rotates about a first axis and is arranged to draw plants through a plucking channel (22), through which parts are separated from the plants, **characterized in that** the plucking roller (34, 36, 58) is fixed on a moving element.

2. An infeed and plucking device according to claim 1, **characterized in that** the movable element turns about a second axis (25) which differs from the first axis.

3. An infeed and plucking device (10) according to claim 1 or 2, **characterized in that** the plucking roller (34, 36, 58) is arranged to transport the plants over the length of the plucking channel (22).

4. An infeed and plucking device (10) according to either of claims 2 and 3,
**characterized in that** the second axis (25) extends at least approximately vertically.

5. An infeed and plucking device (10) according to any of claims 1 to 4, **characterized in that** the plucking roller (34, 36, 58) turns about an axis running at least approximately horizontally.

6. An infeed and plucking device (10) according to any of the preceding claims, **characterized in that** the movable element is a support element (32) on which the at least one plucking roller (34, 36, 58) or a plurality of plucking rollers (34, 36, 58) is or are outwardly arranged.

7. An infeed and plucking device (10) according to claim 6, **characterized in that** a gap (38) is defined between a first plucking roller (34) and an associated second, counter-rotating plucking roller (36) and extends at least approximately radially relative to the support element (32) or tangentially to the periphery of the support element (32).

8. An infeed and plucking device (10) according to claim 6, **characterized in that** a gap (62) is defined between a plucking roller (58) and a fixed wall (60) and extends tangentially or radially to the periphery of the support element (32).

9. An infeed and plucking device (10) according to claim 8, **characterized in that** the fixed wall (60) is arranged on the support element (32) or is in fixed position.

10. An infeed and plucking device (10) according to any of the preceding claims, **characterized in that** a plucking roller (34, 36) has a conical tip or an outer section (42) which is provided with a spiral entraining element, in order to draw in a plant stalk.

11. An infeed and plucking device (10) according to any of claims 6 to 10, **characterized in that** the support element (32) has a radially outer surface (39) between successive plucking assemblies (30) which is straight or curved, in order to introduce a plant stalk (48) into a following plucking assembly (30).

12. An infeed and plucking device (10) according to any of the preceding claims, **characterized by** a rotating upper infeed element (14) with preferably deflecting conveying action, which is disposed above the plucking device (16) and arranged to engage plants independently of rows and feed them into the plucking channel (22).

13. An infeed and plucking device (10) according to claim 12, **characterized in that** the upper infeed element (14) is arranged to transport the plants over the effective length of the plucking channel (22).

14. An infeed and plucking device (10) according to any of the preceding claims, **characterized in that** a stripper plate (20) with a plucking channel (22) arranged therein is disposed above the plucking device (16).

15. An infeed and plucking device (10) according to any of the preceding claims, **characterized in that** the plucking channel (22) runs arcuately.

16. A crop gathering apparatus (12) with an infeed and plucking device (10) according to any of the preceding claims.

## Revendications

1. Dispositif de ramassage et cueillage (10), qui comporte au moins un rouleau de ramassage (34, 36, 58) monté rotatif autour d'un premier axe et conçu pour tirer des plantes à travers un canal de ramassage (22) qui est destiné à séparer des parties de ces plantes, **caractérisé en ce que** le rouleau de ramassage (34, 36, 58) est fixé contre un élément mobile.

2. Dispositif de ramassage et cueillage selon la revendication 1, **caractérisé en ce que** l'élément mobile est entraîné en rotation autour d'un deuxième axe (25) qui se différencie du premier axe.

3. Dispositif de ramassage et cueillage (10) selon la revendication 1 ou 2, **caractérisé en ce que** le rouleau de ramassage (34, 36, 58) est conçu pour transporter les plantes sur toute la longueur du canal de ramassage (22).

4. Dispositif de ramassage et cueillage (10) selon la revendication 2 ou 3, **caractérisé en ce que** le deuxième axe (25) est au moins sensiblement vertical.

5. Dispositif de ramassage et cueillage (10) selon l'une quelconque des revendications 1 à 4, **caractérisé en ce que** le rouleau de ramassage (34, 36, 58) est entraîné en rotation autour d'un axe au moins sensiblement horizontal.

6. Dispositif de ramassage et cueillage (10) selon l'une quelconque des revendications précédentes, **caractérisé en ce que** l'élément mobile est un élément de retenue (32) contre l'extérieur duquel est ou sont agencé(s) ledit au moins un rouleau de ramassage (34, 36, 58) ou plusieurs rouleaux de ramassage (34, 36, 58).

7. Dispositif de ramassage et cueillage (10) selon la revendication 6, **caractérisé en ce que**, entre un premier rouleau de ramassage (34) et un deuxième rouleau de ramassage (36) associé à celui-ci et entraîné en rotation dans le sens opposé, est définie une fente (38) qui s'étend au moins sensiblement radialement vers l'élément de retenue (32) ou tangentiellement au pourtour de l'élément de retenue (32).

8. Dispositif de ramassage et cueillage (10) selon la revendication 6, **caractérisé en ce qu'**entre un rouleau de ramassage (58) et une paroi fixe (60) est définie une fente (62), qui s'étend tangentiellement ou radialement au pourtour de l'élément de retenue (32).

9. Dispositif de ramassage et cueillage (10) selon la revendication 8, **caractérisé en ce que** la paroi fixe (60) est agencée contre l'élément de retenue ou localement fixe.

10. Dispositif de ramassage et cueillage (10) selon l'une quelconque des revendications précédentes, **caractérisé en ce qu'**un rouleau de ramassage (34, 36) comporte une extrémité conique ou un tronçon extérieur (42) qui est muni d'un organe d'entraînement en spirale en vue d'introduire une tige de plante.

11. Dispositif de ramassage et cueillage (10) selon l'une quelconque des revendications 6 à 10, **caractérisé en ce que** l'élément de retenue (32) comporte une surface (39) radialement extérieure rectiligne ou courbe, agencée entre des organes de ramassage (30) consécutifs en vue d'introduire une tige de plante (48) dans un organe de ramassage (30) suivant.

12. Dispositif de ramassage et cueillage (10) selon l'une quelconque des revendications précédentes, **caractérisé en ce qu'**un élément de cueillage supérieur (14) rotatif ayant, de préférence, un comportement de refus de transport, lequel est agencé au-dessus du dispositif de ramassage (16) et est conçu pour saisir des plantes indépendamment des rangs et pour les introduire dans le canal de ramassage (22).

13. Dispositif de ramassage et cueillage (10) selon la revendication 12, **caractérisé en ce que** l'élément de cueillage supérieur (14) est conçu pour transporter les plantes sur toute la longueur active du canal de ramassage (22).

14. Dispositif de ramassage et cueillage (10) selon l'une quelconque des revendications précédentes, **caractérisé en ce qu'**une tôle de débourrage (20), dans laquelle est agencé le canal de ramassage (22), est agencée au-dessus du dispositif de ramassage (16).

15. Dispositif de ramassage et cueillage (10) selon l'une quelconque des revendications précédentes, **caractérisé en ce que** le canal de ramassage (22) s'étend en courbe.

16. Dispositif de récupération de produits de récolte muni d'un dispositif de ramassage et cueillage (10) selon l'une quelconque des revendications précédentes.
